# EUROPÄISCHE PATENTSCHRIFT

(11) **EP 1 829 716 B1**
(45) Veröffentlichungstag und Bekanntmachung des Hinweises auf die Patenterteilung: **15.08.2012**
(21) Anmeldenummer: 07002677.8
(22) Anmeldetag: 08.02.2007
(51) Int. Cl.: B60D 1/52, B60D 1/06

(54) **Anhängerkupplung für Kraftfahrzeuge**
Tow bar for motor vehicles
Attelage pour véhicules automobiles

(30) Priorität: 01.03.2006 DE 102006009275
(43) Veröffentlichungstag der Anmeldung: 05.09.2007
(73) Patentinhaber: WESTFALIA - Automotive GmbH, 33378 Rheda-Wiedenbrück (DE)
(72) Erfinder: Hahn, Jochen, 74223 Flein (DE); Hermbusch, Gerhard, 33449 Langenberg (DE)
(74) Vertreter: Bregenzer, Michael

(56) Entgegenhaltungen:
- EP-A- 1 757 466
- EP-A1- 1 321 317
- DE-A1- 4 312 208
- DE-U1- 20 305 807
- DE-U1- 29 501 733
- DE-U1- 29 609 508
- DE-U1- 29 812 061

## Beschreibung

Die Erfindung betrifft eine Anhängekupplung für ein Kraftfahrzeug mit einem Kupplungsarm, der an seinem freien Ende ein Kopfstück zum lösbaren Befestigen eines Anhängers trägt und mit einem Steckende in eine Steckaufnahme eines an dem Kraftfahrzeug anordenbaren oder angeordneten Halters in einer Einsteck-Längsrichtung einsteckbar ist, nach dem Oberbegriff des Anspruches 1.

Eine solche Anhängekupplung ist beispielsweise aus EP 1 321 317 A1 oder aus den deutschen Gebrauchsmustern DE 295 01 733 U1 und DE 29B 12 061 U1 bekannt. Ein abnehmbarer, steckbarer Kupplungsarm ist in eine Steckaufnahme des Halters einsteckbar. Der Halter ist eine Art Hülse, die an einem Querträger des Kraftfahrzeugs, beispielsweise eines Personenkraftwagens, angeordnet ist. An einem unteren Abschnitt des Steckendes sind keilförmige Kupplungsarm-Anschläge angeordnet, die in korrespondierende nach unten breitere Steckaufnahmeanschläge an der Hülse bzw. dem Halter in der Spannstellung der Spannelemente eingreifen. Die Spannelemente sind bei der bekannten Anhängekupplung Kugeln, die durch eine als in dem steckelement längs geführte Verdrängereinrichtung, z.B. einen Verriegelungsbolzen, nach radial außen vor einen Außenumfang des Steckendes verdrängbar sind, so dass sie eine Spannstellung einnehmen, bei der sie in eine Ausnehmungsanordnung eingreifen, die eine Kugelsitzrinne umfasst. Die Kugeln sind in einer Längsebene an Ecken eines gleichseitigen Dreieckes angeordnet und haben alle denselben Längsabstand zu dem Kupplungsarm-Anschlag. Somit spannen die Kugeln die beiden Anschläge gleichmäßig gegeneinander.

Durch Verschleiß oder auch bei manchen Betriebszuständen des Fahrzeug-Anhängergespanns haben sich jedoch in der Praxis Probleme gezeigt. Beispielsweise ist zwischen einem Lagerring, an dem die Kugelsitzrinne angeordnet ist, und dem korrespondierenden Abschnitt des Steckendes ein Spiel vorhanden, damit das Steckende bzw. die Kugelstange leicht montierbar und demontierbar ist . Dieses Spiel beträgt beispielsweise 0, 1 bis 0, 2 mm im Durchmesser. Beim Anhängerbetrieb ist es möglich, dass sich die Kugelstange mit diesem Spiel oder einem Teil davon bewegt, was beispielsweise Geräusche erzeugen kann oder einen erhöhten Verschleiß der Anhängekupplung bewirkt. Probleme können auch bei Anhängern auftreten, die wechselnde Vertikal-Belastungen auf den Kupplungskopf ausüben, beispielsweise Anhänger mit einer Tandemachse.

Es ist daher die Aufgabe der vorliegenden Erfindung, ein Anhängekupplungs-Stecksystem bereitzustellen, bei dem der Kupplungsarm in Betriebsstellung fest in einer Steckaufnahme des Halters sitzt.

Zur Lösung der Aufgabe ist eine Anhängekupplung gemäß der technischen Lehre des Anspruchs 1 vorgesehen.

Die Anordnung der mindestens zwei Spannelemente - es können auch drei oder mehr Spannelemente vorgesehen sein - in der einen Längshälfte bewirkt eine Spannkraft auf eine oder mehrere Spannflächen, insbesondere an der zweiten Längshälfte, des Steckendes. Die Spannelemente spannen das Steckende in Einsteck-Längsrichtung und zudem quer zur Einsteck-Längs-richtung. Somit wird der Kupplungsarm sozusagen in der Steckaufnahme verkeilt. Weil mindestens zwei Spannelemente vorhanden sind, wird das Steckende fest und über einen großen Umfangsbereich wirksam bezüglich der Einsteck-Längsrichtung verspannt. Dazu kommt noch die durch die Anordnung der Spannelemente nur auf einem Teilumfang des Steckendes bedingte Quer-Spannkraft quer zur Einsteck-Längsrichtung.

Das Steckende hat einen besonders festen Sitz in der Steckaufnahme.

Die Spannkraft tritt an einem oder mehreren Umfangsbereichen des Steckendes auf. Der Umfangsbereich ist etwa in derselben Längsposition bezogen auf die Einsteck-Längsrichtung, wo auch die mindestens zwei Spannelemente angeordnet sind.

Beispielsweise weist die Ausnehmungsanordnung eine ringförmige Aufnahme auf, in der eine Rinne oder einzelne Ausnehmungen für die mindestens zwei Spannelemente vorgesehen sind. In der Spannstellung spannen die mindestens zwei Spannelemente einen Umfangsbereich des Steckendes gegen die ringförmige Aufnahme, die an der zweiten Längshälfte des Steckendes zugeordnet ist.

Die Spannkraft kann an mehreren Stellen vorteilhaft gebildet sein:
Ferner können die Spannelemente, die bezogen auf die Einsteck-Längsrichtung in einem Längsabstand zu dem mindestens einen Kupplungsarm-Anschlag sowie dem jeweils korrespondierenden Steckaufnahmeanschlag beabstandet sind, auch diese beiden Anschläge im Bereich der zweiten oder der ersten Längshälfte mit einer quer zur Einstecklängsrichtung orientierten Spannkraft beaufschlagen.

Der mindestens eine Steckaufnahmeauschlag ist zweckmäßigerweise im Bereich einer Einstecköffnung der Steckaufnahme angeordnet. Der Steckaufnahmeanschlag umfasst zweckmäßigerweise eine Stirnseite und/oder eine Innenseite einer Umfangswandung der Steckaufnahme oder ist daran angeordnet. Beispielsweise hat der mindestens eine Steckaufnahmeanschlag mindestens eine kreisrunde und/oder eine elliptische und/oder eine V-förmige Ausnehmung (beide Varianten können bei einer erfindungsgemäßen Anhängekupplung vorgesehen sein), wobei die Aufnahmen zur Einstecköffnung hin breiter sind. In diese Aufnahmen können korrespondierende Kupplungsarm-Anschläge, die korrespondierend kreisförmig bzw. v-förmig sind, eingreifen. Die Ausnehmungen sind beispielsweise an einer oder mehreren Seitenwandungen der Einstecköffnung angeordnet, beispielsweise an zwei gegenüberliegenden Seiten der Einstecköffnung. Die mindestens eine Spannfläche umfasst beispielsweise eine bezogen auf die Einsteck-Längsrichtung schräge oder gerundete Fläche der V-förmigen oder kreisrunden Ausnehmung. Gegen diese Spannfläche bzw. Teilfläche der Ausnehmung wirkt die Spannkraft der mindestens zwei Spannelemente.

Die mindestens zwei Spannelemente sind bezogen auf die Einstecklängsrichtung zweckmäßigerweise in einem vorderen Bereich des Steckendes angeordnet und die Steck-Anschläge am Kupplungsarm und der Steckaufnahme in einem hinteren Bereich.

Die beiden Spannelemente greifen zweckmäßigerweise spreizfußartig in die Ausnehmungsanordnung ein. Beispielsweise umfassen zwei Spannelemente einen Winkel von etwa 100° bis 140°. Eine Anordnung in einem Winkel von etwa 120° ist besonders bevorzugt.

Eine das Steckende in die Längshälften teilende Längshälften-Schnittebene verläuft vorteilhafterweise etwa in Fahrzeugquerrichtung des Kraftfahrzeuges. Wenn die Anhängekupplung an dem Kraftfahrzeug montiert ist bzw. der Kupplungsarm in die Steckaufnahme eingesteckt ist verspannen die zwei oder mehr Spannelemente den Kupplungsarm in Fahrzeuglängsrichtung und in Fahrzeugquerrichtung.

Die Längshälften-Schnittebene verläuft beispielsweise senkrecht zu einer den Kupplungsarm und den Kupplungskopf schneidenden Schnittebene. Der Kupplungsarm steht in einer Fahrzeuglängsrichtung nach hinten vor das Kraftfahrzeug vor.

Die mindestens zwei Spannelemente sind zweckmäßigerweise symmetrisch zu einer Längsachse des Kraftfahrzeugs angeordnet, wenn die Kupplung montiert ist. Somit ist eine gleichmäßige Kraftbeaufschlagung sowohl in Fahrzeuglängsrichtung als auch in Fahrzeugquerrichtung möglich.

Es versteht sich, dass auch weitere Spannelemente, in der zweiten Längshälfte vorgesehen sein können, beispielsweise ein Spannelement das symmetrisch zwischen zwei weiteren Spannelementen angeordnet ist. Dieses weitere Spannelement ist vorteilhaft etwa im Bereich einer Fahrzeuglängsmittelachse angeordnet. In diesem Zusammenhang sei betont, dass die Spannelemente der zweiten Längshälfte eine ungerade oder eine gerade Anzahl haben können.

Die Spannelemente, beispielsweise Kugeln, Walzen oder dergleichen, werden durch die Verdrängereinrichtung nach radial außen druckbeaufschlagt, beispielsweise durch Keilelemente, Federn, oder in einer besonders bevorzugten Ausführungsform durch einen Verriegelungsbolzen, der in einer Führungsbohrung in dem Steckende längsverschieblich geführt ist.

Die Verdrängereinrichtung weist zweckmäßigerweise mindestens eine Schrägfläche auf, die den mindestens zwei Spannelementen zugeordnet ist. Beispielsweise ist die Schrägfläche durch konische Flächen an dem Verriegelungsbolzen gebildet, der in einer Führungsbohrung des Steckendes längsverstellbar geführt ist. Es versteht sich, dass auch eine andersartige Verdrängereinrichtung prinzipiell möglich ist, beispielsweise eine Art Verdrängergetriebe oder dergleichen. Die Schrägfläche der Verdrängereinrichtung ist vorteilhafterweise selbsthemmend. Sie hat z.B. eine selbsthemmend flache Neigung, so dass eine von den Spannelementen auf die Verdrängereinrichtung rückwirkende Kraft keine Längsverlagerung der Verdrängereinrichtung in Richtung der Lösestellung bewirkt.

Die Schrägfläche ist beispielsweise durch einen konischen Kopf des Verriegelungsbolzens gebildet. Die Verdrängereinrichtung, z.B. der Verriegelungsbolzen, wird zweckmäßigerweise durch eine Federanordnung in der Verriegelungsstellung gehalten. Es versteht sich, dass auch weitere Sicherungselemente zum Sichern der Verriegelungsstellung möglich sind, beispielsweise kann eine Sicherungseinrichtung vorgesehen sein, die in der Haltestellung und/oder in der Freigabestellung eine Längsverstellung der Verdrängereinrichtung, z.B. des Verriegelungsbolzens, verhindert. Die Sicherungseinrichtung enthält beispielsweise einen Sicherungsbolzen, der quer zur Längsverstellrichtung der Verdrängereinrichtung in eine Ausnehmung an derselben eingreift. Der Sicherungsbolzen ist beispielsweise in Richtung seiner Sicherungsstellung federbelastet.

Die Verdrängereinrichtung bzw. der Verriegelungsbolzen sind vorteilhafterweise durch eine Hebelanordnung, ein Getriebe oder dergleichen in die Verriegelungsstellung und/oder die Entriegelungsstellung bringbar. Besonders bevorzugt ist ein Zahngetriebe mit einem Zahnrad, das mit einem Zahnstangenabschnitt an der Verdrängereinrichtung, z.B. dem Verriegelungsbolzen, kämmt.

Die mindestens zwei Spannelemente können zweckmäßigerweise auch auf die Verdrängereinrichtung eine quer zur Einsteckrichtung orientierte Spannkraft ausüben. Beispielsweise umfasst die mindestens eine Spannfläche eine Anlagefläche der Führungsbohrung im Bereich der zweiten Längshälfte. Die mindestens zwei Spannelemente klemmen in der Spannstellung die Verdrängereinrichtung, insbesondere den Verriegelungsbolzen, gegen die Anlagefläche. Beispielsweise wirken die Spannelemente auf den Kopf des Verriegelungsbolzens. Die Verdrängereinrichtung bzw. der Verriegelungsbolzen wird sozusagen in der Führungsbohrung verklemmt oder verkeilt.

Die mindestens zwei Spannelemente haben bezüglich des mindestens einen Kupplungsarm-Anschlags im Wesentlichen den gleichen Spannweg. Dies ist beispielsweise dann der Fall, wenn der Längsabstand der mindestens zwei Spannelemente zu demjenigen mindestens einen Kupplungsarm-Anschlag gleich ist, der dem jeweiligen Spannelement zugeordnet ist. Es versteht sich, dass beiden Spannelementen ein einziger Kupplungsarm-Anschlag zugeordnet sein kann oder auch mehrere Kupplungsarm-Anschläge.

Der Spannweg ist aber auch dann gleich, wenn die Spannelemente einen unterschiedlichen Längsabstand zu einem jeweiligen Kupplungsarm-Anschlag haben und eine dem jeweiligen Spannelement zugeordnete Ausnehmung an der Steckaufnahme des Halters bzw. der Hülse in einem korrespondierenden Längsabstand zu dem jeweiligen Steckaufnahme-Anschlag angeordnet ist. Es ist also nicht notwendig, dass die Längsabstände der Spannelemente zu dem jeweils zugeordneten Kupplungsarm-Anschlag dieselben sind, wenn der Spannweg der Spannelemente dennoch im Wesentlichen gleich lang ist.

In einer besonders bevorzugten, einfachen Ausführung der Erfindung umfasst die Ausnehmungsanordnung für die mindestens zwei Spannelemente eine Ringnut, die sich zumindest über einen Umfangsabschnitt an der Steckaufnahme erstreckt, der der ersten Längshälfte zugeordnet ist. Auch eine umlaufende Ringnut ist möglich. Ferner ist es denkbar, jedem der Spannelemente eine individuelle Ausnehmung der Ausnehmungsanordnung zuzuordnen.

Die Ringnut oder eine sonstige Ausnehmung, die mindestens einem der Spannelemente zugeordnet ist, weist zweckmäßigerweise ein in Richtung des mindestens einen Kupplungsarm-Anschlags geneigte Einlaufschräge zum Verspannen der Steck-Anschläge am Kupplungsarm und der Steckaufnahme auf. Ferner kann die Ausnehmung einen geradlinigen Abschnitt in einem ansonsten kreisförmigen Verlauf, beispielsweise der Ringnut oder Kugelsitzrinne, aufweisen.

Die Einlaufschräge oder der geradlinige Abschnitt ermöglichen es, dass durch zusätzliche Längsverstellung der Verriegelungseinrichtung, beispielsweise des Verriegelungsbolzens, die Spannelemente auch bei einem Verschleiß der Anhängekupplung sozusagen nachgestellt werden und das Steckende an der Steckaufnahme verspannen.

Zweckmäßigerweise umfasst die Verriegelungsanordnung mindestens ein im Bereich der zweiten Längshälfte angeordnetes Sicherungselement. Das Sicherungselement greift in der Verriegelungsstellung der Verriegelungsanordnung zur Sicherung des Steckendes gegen ein Ausziehen aus der Steckaufnahme in eine Ausnehmung an der Steckaufnahme ein. Das Sicherungselement ist allerdings entgegen der Einsteck-Längsrichtung zumindest im Wesentlichen wirkungslos, wenn die Spannelemente in ihrer Spannstellung sind. Die Keilwirkung bzw. Spannwirkung der mindestens zwei Spannelemente in der ersten Längshälfte wird somit durch das Sicherungselement nicht beeinträchtigt. Das mindestens eine Sicherungselement ist vorzugsweise durch die Verdrängereinrichtung vor den Außenumfang des Steckendes in seine Sicherungsstellung verdrängbar. Die Verdrängereinrichtung wirkt somit nicht nur auf die mindestens zwei Spannelemente und zweckmäßigerweise simultan auf das Sicherungselement, wenn die Verriegelungseinrichtung in ihre Verriegelungsstellung verstellt wird. Das mindestens eine Sicherungselement ist zweckmäßigerweise symmetrisch zwischen den mindestens zwei Spannelementen angeordnet. Die Spannelemente und das Sicherungselement bilden beispielsweise ein gleichschenkliges Dreieck. Wenn beispielsweise drei Elemente vorhanden sind, sind diese zweckmäßigerweise jeweils in einem Winkel von 120° zueinander angeordnet.

Vorteilhafterweise greifen das mindestens eine Sicherungselement und die mindestens zwei Spannelemente in eine gemeinsame Ringnut der Ausnehmungsanordnung ein. Das Sicherungselement ist jedoch bezogen auf die Einsteckrichtung vor den mindestens zwei Spannelementen angeordnet, so dass in der Spannstellung die mindestens zwei Spannelemente gegen eine Seitenwand der Ringnut gespannt sind, das mindestens eine Sicherungselement jedoch nicht.

Beispielsweise hat die Ringnut wie in der DE 295 01 733 U1 beschrieben einen geradlinigen Bodenabschnitt, in dem sich das mindestens eine Sicherungselement befindet, wohingegen die mindestens zwei Spannelemente gegen eine Seitenwand der Ringnut gespannt sind. Diese Seitenwand der Ringnut ist diejenige Seitenwand, die näher bei dem mindestens einen Steckaufnahmeanschlag ist.

Es versteht sich, dass das mindestens eine Sicherungselement und die mindestens zwei Spannelemente auch in demselben Längsabstand zu dem Kupplungsarm-Anschlag bzw. dem Steckaufnahmeanschlag sein können, wenn die Ausnehmungsanordnung eine Ausnehmung für das Sicherungselement aufweist, das einen größeren Längsabstand zu dem mindestens einen Kupplungsarm-Anschlag und dem Steckaufnahmeanschlag hat als mindestens eine Ausnehmung, die den mindestens zwei Spannelementen zugeordnet ist.

Ferner ist es vorteilhaft, wenn das Sicherungselement von der Verdrängereinrichtung weniger weit vor einen Außenumfang des Steckendes verdrängt wird als die mindestens zwei Spannelemente, um deren Spann- und Keilwirkung nicht zu verringern. Beispielsweise kann das Sicherungselement eine Kugel oder Walze mit einem kleineren Durchmesser sein als Kugeln oder Walzen, die die mindestens zwei Spannelemente bilden.

Es ist auch möglich, dass den mindestens zwei Spannelementen erste Schrägflächen und dem mindestens einen Sicherungselement eine zweite Schrägfläche zugeordnet sind, wobei die ersten Schrägflächen die mindestens zwei Spannelemente weiter nach radial außen verdrängen als die zweite Schrägfläche.

Die Spannelemente und/oder die Sicherungselemente können beispielsweise durch Kugeln, Walzen oder dergleichen gebildet sein. Es versteht sich, dass auch schrägverstellbare Keile oder sonstige Formelemente die Sicherungselemente oder die Spannelemente bilden können.

Nachfolgend wird ein Ausführungsbeispiel der Erfindung anhand der Zeichnung erläutert. Es zeigen:
- Figur 1: eine Seitenansicht einer erfindungsgemäßen Anhängekupplung,
- Figur 2: eine etwa entlang einer Schnittlinie A-A in Figur 1 teilweise geschnittene Draufsicht der Anhängekupplung gemäß Figur 1,
- Figur 3: eine teilweise etwa entlang einer Schnittlinie B-B in Figur 2 geschnittene Seitenansicht der Anhängekupplung gemäß Figuren 1, 2, und
- Figur 4: eine Teilansicht, etwa entsprechend einem Ausschnitt X in Figur 3, einer Variante des Ausführungsbeispiels gemäß Figuren 1, 2 und 3.

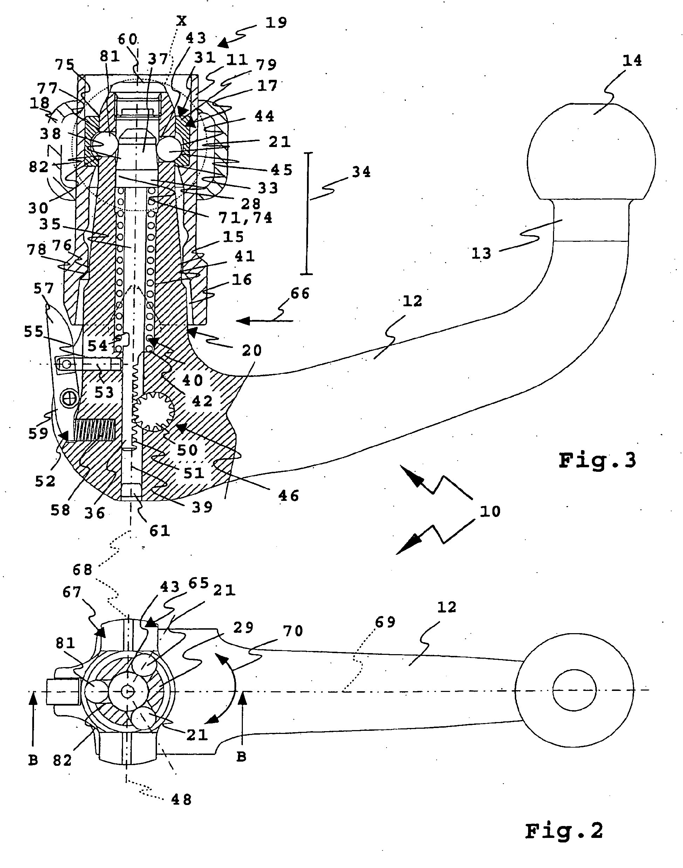

Ein Kupplungsarm 12 einer Anhängekupplung 10 ist mit einem Steckende 15 in eine Steckaufnahme 16 eines Halters 11 einsteckbar. Der Kupplungsarm 12 trägt an seinem freien Ende 13 ein Kopfstück 14 zum Ankuppeln eines Anhängers. Der Halter 11 ist in der Art einer Einsteckhülse ausgestaltet und beispielsweise an einem Fahrzeugquerträger 18 eines Kraftfahrzeugs 19 befestigt, z.B. angeschweißt, angeschraubt oder dergleichen. Der Kupplungsarm 12 ragt in seinem in Figur 3 dargestellten montierten Zustand nach hinten vor das Kraftfahrzeug 19 vor.

Wenn das Steckende 15, im Ausführungsbeispiel von unten, in die Steckaufnahme 16 eingesteckt ist (ein schräges Einstecken oder ein Einstecken in Fahrzeuglängsrichtung wäre bei einer erfindungsgemäßen Anhängekupplung auch denkbar) ist der Kupplungsarm 12 mit einer Verriegelungsanordnung 17 an dem Halter 11 verriegelbar.

Das Steckende 15, das z.B. eine turmartige Struktur hat, ist zumindest in seinem oberen Bereich als ein Drehteil ausgestaltet, das heißt es hat kreiszylindrische und/oder konische Abschnitte. Es versteht sich, dass die Erfindung nicht auf kreisrunde Außenkonturen eines Steckendes beschränkt ist, sondern dass auch polygone Außenkonturen denkbar sind.

Im in die Steckaufnahme 16 gesteckten Zustand des Steckendes 15 spannen Spannelemente 21 der Verriegelungsanordnung 17 Kupplungsarm-Anschläge 22 an einem Fußbereich 20 des Steckendes 15 gegen Steckaufnahmeanschläge 23 des Halters 11. Die Kupplungsarm-Anschläge 22 sind beispielsweise seitliche keilförmige Vorsprünge 24, die in korrespondierende keilförmige Ausnehmungen 25 an Seitenwandungen 26 einer Einstecköffnung 27 der Steckaufnahme 16 eingreifen.

Es versteht sich, dass in einer nicht dargestellten Variante beispielsweise auch ein kragenartiger Flansch an dem Fußbereich vorgesehen sein kann, der an eine untere Stirnseite von Seitenwandungen einer Einstecköffnung einer Steckaufnahme anschlägt.

Die Spannelemente 21 sind vorteilhaft Kugeln, die durch eine Verdrängereinrichtung 28 im Innern des Steckendes 15 vor einen Außenumfang 29 verdrängbar sind, so dass sie in ihrer Spannstellung in eine Ringnut 30 einer Ausnehmungsanordnung 31 eingreifen und die Anschläge 22 in Einsteck-Längsrichtung 32 spannen. Die Spannelemente 21 sind an einem vorderen Abschnitt 33 des Steckendes 15 angeordnet, so dass zwischen den Spannelemente 21 und den Anschlägen 22, 23 ein Längsabstand 34 vorhanden ist.

Die Verdrängereinrichtung 28 umfasst einen Verriegelungsbolzen 35 mit einem Stangenabschnitt 36, an dessen vorderen Ende ein Kopf 37 angeordnet ist. Der Kopf 37 ist abschnittsweise konisch, so dass Schrägflächen 38 oder eine einzige Schrägfläche 38 gebildet sind bzw. ist. Der Verriegelungsbolzen 35 ist in einem Führungskanal, z.B. einer Führungsbohrung 39, im Innern des Steckendes 15 längsverstellbar.

Eine Federanordnung 40 mit einer Schraubenfeder 41 ist in eine Verriegelungsstellung vorgespannt. Die Schraubenfeder 41 stützt sich einerseits an einem Vorsprung 42 in der Führungsbohrung 39 und andererseits am Kopf 37 ab, so dass die Federanordnung 40 den Kopf 32 in Richtung der Verriegelungsstellung, in der Zeichnung nach oben, verlagert. Dabei drücken die Schrägflächen 38 die Kugeln bzw. Spannelemente 21, die in Kanälen oder Bohrungen 43 geführt sind, nach radial außen, so dass die Spannelemente 21 in die Ringnut 30 eingreifen und das Steckende 15 in der Steckaufnahme 16 verspannen.

Die Ringnut 31 hat vorteilhaft einen mittleren, flach verlaufenden Abschnitt 44, an den sich zur Spannstellung hin, in Zeichnung nach unten, eine Einlaufschräge anschließt. Wenn der Verriegelungsbolzen 35 die Kugel-Spannelemente 21 nach radial außen verdrängt, werden die Spannelemente 21 gegen eine untere gerundete und/oder schräge Seitenwand 45 der Ringnut 30 gespannt. Die Seitenwand 45 bildet zweckmäßigerweise eine Schrägfläche.

Der Verriegelungsbolzen 35 kann mit einem Getriebe 46 entriegelt werden. Eine Drehwelle 47 des Getriebes 46 ist in Querrichtung 48 des Kupplungsarms 12 an diesem drehbar gelagert. Die Drehwelle 47 ist mit einem Drehknebel 49 betätigbar. Ein Zahnrad 50 an der Drehwelle 47 kämmt mit einem Zahnabschnitt 51 an dem Stangenabschnitt 36, so dass durch Drehbetätigung des Drehknebels 49 der Verriegelungsbolzen 35 längsverstellbar ist. Dabei muss die in Richtung der Verriegelungsstellung wirkende Kraft der Federanordnung 40 überwunden werden.

Zum Halten des Verriegelungsbolzens 35 in der Entriegelungsstellung ist eine Sicherungseinrichtung 52 mit einem Sicherungsbolzen 53 vorgesehen, der in seiner Sicherungsstellung in eine Ausnehmung 54 an dem Verriegelungsbolzen 35 eingreift. Der Sicherungsbolzen 53 ist in einer Radial-Bohrung 55 verstellbar. Der Sicherungsbolzen 53 ist mittels einer an dem Kupplungsarm 12 schwenkbar gelagerten, von außen betätigbaren Wippe 56 längsverstellbar. Der Sicherungsbolzen 53 ist schwenkbeweglich an einem Betätigungsarm 57 der Wippe 56 gelagert, die durch eine Feder 58, die auf einen Rückstellarm 59 der Wippe 56 wirkt, in die Sicherungsstellung federbelastet ist, so dass bei nicht betätigter Wippe 56 der Sicherungsbolzen 53 in die Ausnehmung 54 schnappt, wenn die Ausnehmung 54 und die Bohrung 55 einander gegenüberstehen. Somit sichert die Sicherungseinrichtung 52 die Verdrängereinrichtung 28 in ihrer Entriegelungsstellung.

Die Führungsbohrung 39 ist eine Durchgangsbohrung, die durch das Steckende 15 hindurch verläuft. Die Enden der Führungsbohrung 39 sind durch Verschlüsse 60, 61 verschlossen.

Wenn die Spannelemente 21 in ihrer Spannstellung sind (siehe Figur 3) ziehen sie sozusagen die Kupplungsarm-Anschläge 22 gegen die Steckaufnahmeanschläge 23 in Einsteck-Längsrichtung 32. Die Spannelemente 21 sind in einer ersten Längshälfte 65 des Steckendes 15 angeordnet. Diese asymmetrische Anordnung der Spannelemente 21 an der Längshälfte 65 bewirkt, dass die Spannelemente 65 eine Spannkraft 66 quer zur Einstecklängsrichtung 32 auf Spannflächen 71, 72 und 73, die insbesondere im Bereich einer zweiten Längshälfte 67 des Steckendes 15 sind, ausüben. Somit wird das Steckende 15 in der Steckaufnahme 16 nicht nur in Einsteck-Längsrichtung 32 gespannt, sondern sozusagen verkeilt.

Die Längshälften 65, 67 grenzen an einer Längshälften-Schnittebene 68 aneinander, die im montierten Zustand der Anhängekupplung in Fahrzeugquerrichtung des Kraftfahrzeugs 19 verläuft. Bei der vorliegend runden Außenkontur des Steckendes 15 teilt die Schnittebene 68 das Steckende exakt in der Mitte.

Es versteht sich, dass bei andersartigen Außenkonturen, insbesondere polygonen Außenkonturen, auch eine außermittige Teilung des jeweiligen Steckendes in Längshälften möglich ist. Wesentlich ist hierbei allerdings, dass die Spannelemente nicht gleichmäßig über den Außenumfang des jeweiligen Steckendes verteilt sind, sondern in asymmetrischer Anordnung, so dass sie eine Querkraft oder Spannkraft in der Art der Spannkraft 66 auf einen den Spannelementen entgegengesetzten Bereich, z.B. einen Umfangsbereich, des Steckendes ausüben können.

Die Spannelemente 21 sind Umfangsrichtung 70 des Steckendes 15 in einem Abstand zueinander angeordnet. Die Spannelemente 21 sind symmetrisch zu einer Längsachse 69 des Kraftfahrzeugs 19. Beispielsweise sind die Spannelemente 21 jeweils in einem 60° Winkel zu der Längsachse 69 angeordnet. Die Längsachse 69 verläuft durch eine Schnittebene, die den Kupplungsarm 12 sowie dessen Enden 13, 15 mittig teilt.

Die Spannfläche 71, auf die die Spannelemente 21 die Spannkraft 66 ausüben, ist beispielsweise eine Anlagefläche 74 in der Führungsbohrung 39. Die Spannelemente 21 klemmen den Verriegelungsbolzen 35, z.B. dessen Kopf 37, gegen die Anlagefläche 74.

Ferner klemmen die Spannelemente 21 vorteilhaft Umfangsbereiche 75, 76 an der zweiten Längshälfte 67, die die Spannflächen 72 bilden, gegen korrespondierende Aufnahmebereiche 77, 78 der Steckaufnahme 16. Ein oberer Umfangsbereich 75 hat etwa dieselbe Längsposition an dem Steckende 15 wie die beiden Spannelemente 21. Der Aufnahmebereich 77 wird durch einen Lagerring 79 gebildet, der die Ringnut 30 aufweist. Vorteilhafterweise klemmen die Spannelemente 21 auch einen weiter unten liegenden Umfangsbereich 76 gegen einen Aufnahmebereich 78. Dies ist aber nicht unbedingt erforderlich.

Besonders zweckmäßig ist es, dass die Spannelemente 21 die Spannkraft 66 seitlich auf die Anschläge 22, 23 ausüben. Eine oder beide Stirnseiten der Ausnehmungen 25 bzw. die korrespondierende Anlagefläche der Anschlag-Vorsprünge 24 bilden die Spannflächen 73.

Als eine zusätzliche Sicherungsmaßnahme ist bei der Anhängekupplung 10 ein Sicherungselement 81 vorgesehen, das in die Ringnut 30 und somit in eine Ausnehmung an der Steckaufnahme 16 eingreift. Beispielsweise bei einer anormalen Überbeanspruchung, z.B. einem Unfall, sichert das Sicherungselement 81 den Kupplungsarm 12 zusätzlich zu den Spannelementen 21 gegen ein gewaltsames Ausziehen aus der Steckaufnahme 16. Wenn die Spannelemente 21 jedoch normal wirksam sind und ihre Spannfunktion ausüben, ist das Sicherungselement 81 zumindest im Wesentlichen wirkungslos.

Das Sicherungselement 81 ist an der zweiten Längshälfte 67 angeordnet. Das Sicherungselement 81 ist eine Kugel, die in einer Radial-Bohrung 82 geführt ist. Der Verriegelungsbolzen 35 verdrängt das Sicherungselement 81 in seiner Verriegelungsstellung nach radial außen vor den Außenumfang 29, so dass es in die Ringnut 30 eingreift. Dort liegt das Sicherungselement im flachen Abschnitt 44 und nicht an der unteren Seitenwand 45 an, wo es ansonsten eine Spannkraft ausüben würde. Das Sicherungselement 81 ist dazu beispielsweise um einen Abstand d weiter von den Anschlägen 22, 23 entfernt als die Spannelemente 21.

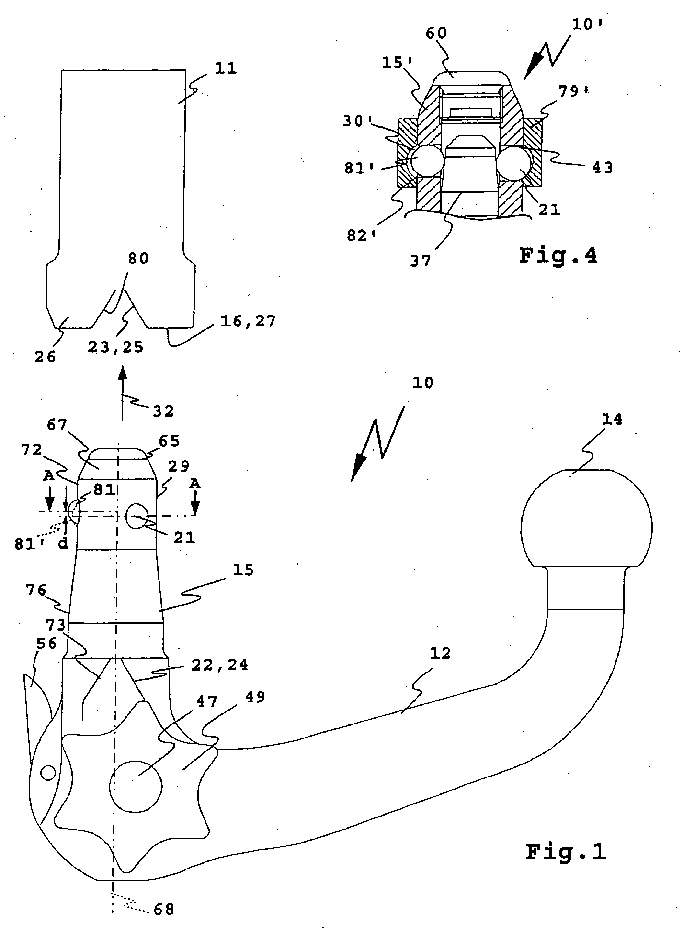

Bei einer in Figur 4 dargestellten Variante 10' der Anhängekupplung 10 ist ein Sicherungselement 81' an einem Steckende 15' etwa in derselben Längsposition bezüglich der Einsteck-Längsrichtung 32 wie die Spannelemente 21 angeordnet, z.B. etwa im Abstand 34 zu den Anschlägen 22, 23. Eine Ringnut 30' eines Lagerrings 79' hat im Gegensatz zu der Ringnut 30 keinen flachen Abschnitt 44. Das Sicherungselement 81' tritt jedoch aufgrund beispielsweise seines gegenüber den Spannelementen 21 kleineren Durchmessers weniger weit als diese in die Ringnut 30' ein, so dass die erfindungsgemäße Spann- und Keilwirkung der Spannelemente 21 nicht geschwächt wird. Die Spannelemente 21 sind in ihrer Spannstellung gegen eine untere gerundete und/oder schräge Seitenwand 45' der Ringnut 30' gespannt, das Sicherungselement 81' nicht. Bei außerordentlicher Gewalteinwirkung, z.B. einem Unfall, wenn die Spannelemente 21 durch eine Zugbeanspruchung in Einsteck-Längsrichtung 32 nach unten z.B. bereits in die Seitenwand 45' eindringen, sichert das Sicherungselement 81' zusätzlich gegen diese Zugbelastung. Eine Radial-Bohrung 82' für das Sicherungselement 81', das z.B. eine Kugel ist, hat einen kleineren Durchmesser als die Radial-Bohrung 82 bzw. die Bohrungen 43 für die Spannelemente 21.

## Patentansprüche

1. Anhängekupplung für ein Kraftfahrzeug (19) mit einem Kupplungsarm (12), der an seinem freien Ende (13) ein Kopfstück (14) zum lösbaren Befestigen eines Anhängers trägt und mit einem Steckende (15, 15') in eine Steckaufnahme (16) eines an dem Kraftfahrzeug (19) anordenbaren oder angeordneten Halters (11) in einer Einsteck-Längsrichtung (32) einsteckbar ist, und mit einer Verriegelungsanordnung (17) zur Verriegelung des Kupplungsarms (12) an dem Halter (11), mit einer in dem Steckende (15, 15') angeordneten Verdrängereinrichtung (28) der Verriegelungsanordnung (17) zum Verdrängen von mindestens zwei Spannelementen (21) vor einen Außenumfang (29) des Steckendes (15, 15') in eine Verriegelungsstellung, bei der die mindestens zwei Spannelemente (21) gegen eine korrespondierende Ausnehmungsanordnung (31) an der Steckaufnahme (16) eingreifen und eine Spannstellung einnehmen, bei der sie mindestens einen bezüglich der Einsteck-Längsrichtung (32) von den mindestens zwei Spannelementen (21) entfernt angeordneten Kupplungsarm-Anschlag (22) gegen mindestens einen Steckaufnahmeanschlag (23) spannen, wobei die mindestens zwei Spannelemente (21) an einer ersten Längshälfte (65) des Steckendes (15, 15') und in Umfangsrichtung (70) des Steckendes in einem Abstand zueinander angeordnet sind und in der Spannstellung auf mindestens eine im Bereich einer zweiten Längshälfte (67) angeordnete Spannfläche (71-73) des Steckendes (15, 15') eine Spannkraft quer zur Einsteck-Längsrichtung (32) ausüben, wobei die mindestens zwei Spannelemente (21) spreizfussartig in die Ausnehmungsanordnung (31) eingreifen, das Steckende in Einsteck-Längsrichtung und quer zur Einsteck-Längsrichtung spannen und den Kupplungsarm in der Steckaufnahme verkeilen, und die mindestens eine Spannfläche (71-73) einen Umfangsbereich (75, 76) an der zweiten Längshälfte (67) des Steckendes (15, 15') umfasst, den die mindestens zwei Spannelemente (21) in deren Spannstellung gegen einen korrespondierenden Aufnahmebereich (77, 78) der Steckaufnahme (16) spannen, **dadurch gekennzeichnet, dass** der mindestens eine Umfangsbereich (75) bezogen auf die Einsteck-Längsrichtung (32) etwa dieselbe Längsposition an dem Steckende (15, 15') wie die mindestens zwei Spannelemente (21) hat.

2. Anhängekupplung nach Anspruch 1, **dadurch gekennzeichnet, dass** die mindestens zwei Spannelemente (21) einen Winkel von etwa 100 bis 140 Grad einschließen.

3. Anhängekupplung nach Anspruch 1 oder 2, **dadurch gekennzeichnet, dass** eine das Steckende (15, 15') in die Längshälften (65, 67) teilende Längshälften-Schnittebene (68) im montierten Zustand der Anhängekupplung (10) in Fahrzeugquerrichtung des Kraftfahrzeugs (19) verläuft.

4. Anhängekupplung nach einem der vorhergehenden Ansprüche, **dadurch gekennzeichnet, dass** die mindestens zwei Spannelemente (21) im montierten Zustand der Anhängekupplung (10) symmetrisch zu einer Längsachse (69) des Kraftfahrzeugs (19) sind.

5. Anhängekupplung nach einem der vorhergehenden Ansprüche, **dadurch gekennzeichnet, dass** die Verdrängereinrichtung (28) mindestens eine den mindestens zwei Spannelementen (21) zugeordnete Schrägfläche (38) aufweist.

6. Anhängekupplung nach einem der vorhergehenden Ansprüche, **dadurch gekennzeichnet, dass** die verdrängereinrichtung (28) einen in einem Führungskanal (39) des Steckendes (15, 15') längsverstellbar geführten Verriegelungsbolzen (35) enthält.

7. Anhängekupplung nach Anspruch 6, **dadurch gekennzeichnet, dass** die mindestens eine Spannfläche (71-73) eine Anlagefläche (74) in dem Führungskanal (39) im Bereich der zweiten Längshälfte (67) umfasst, wobei die mindestens zwei Spannelemente (21) in der Spannstellung den Verriegelungsbolzen (35) gegen die Anlagefläche klemmen.

8. Anhängekupplung nach einem der vorhergehenden Ansprüche, **dadurch gekennzeichnet, dass** der mindestens eine Steckaufnahmeanschlag (23) im Bereich einer Einstecköffnung (27) der Steckaufnahme angeordnet ist.

9. Anhängekupplung nach einem der vorhergehenden Ansprüche, **dadurch gekennzeichnet, dass** der mindestens eine Steckaufnahmeanschlag (23) mindestens eine kreisrunde und/oder eine V-förmige ausnehmung (25) mit einer zur Einstecköffnung (27) orientierten breiteren Öffnungsseite aufweist.

10. Anhängekupplung nach Anspruch 9, **dadurch gekennzeichnet, dass** die mindestens eine Spannfläche (71-73) eine bezogen auf die Einsteck-Längsrichtung (32) schräge oder gerundete Fläche der mindestens einen Ausnehmung (25) umfasst.

11. Anhängekupplung nach einem der vorhergehenden Ansprüche, **dadurch gekennzeichnet, dass** jedes der mindestens zwei Spannelemente (21) bezüglich des mindestens einen Kupplungsarm-Anschlags (22) im wesentlichen den gleichen Spannweg aufweist.

12. Anhängekupplung nach einem der vorhergehenden Ansprüche, **dadurch gekennzeichnet, dass** der Längsabstand der mindestens zwei Spannelemente (21) zu demjenigen mindestens einen Kupplungearm-Anechlag (22) gleich ist, der dem jeweiligen Spannelement (21) zugeordnet ist.

13. Anhängekupplung nach einem der vorhergehenden Ansprüche, **dadurch gekennzeichnet, dass** die Ausnehmungsanordnung (31) für die mindestens zwei Spannelemente (21) eine Ringnut (30, 30') umfasst, die sich zumindest über einen der ersten Längshälfte (65) des Steckendes (15, 15') zugeordneten Innenbereich der Steckaufnahme (16) erstreckt.

14. Anhängekupplung nach Anspruch 13, **dadurch gekennzeichnet, dass** die Ringnut (30, 30') eine in Richtung des mindestens einen Kupplungsarm-Anschlags (22) geneigte Einlauf- oder Spannschräge und/oder einen flachen Abschnitt (44) aufweist.

15. Anhängekupplung nach einem der vorhergehenden Ansprüche, **dadurch gekennzeichnet, dass** die Verriegelungsanordnung mindestens ein im Bereich der zweiten Längshälfte (67) angeordnetes Sicherungselement (81, 81') aufweist, das in der Verrieglungsstellung der Verriegelungsanordnung (17) zur Sicherung des Steckendes (15, 15') gegen ein Ausziehen aus der Steckaufnahme (16) in eine Ausnehmung an der Steckaufnahme (16) eingreift, wobei das Sicherungselement (81, 81') entgegen der Einsteck-Längsrichtung (32) zumindest im wesentlichen wirkungslos ist, wenn die Spannelemente (21) in ihrer Spannstellung sind.

16. Anhängekupplung nach Anspruch 15, **dadurch gekennzeichnet, dass** das mindestens eine Sicherungselement (81, 81') durch die Verdrängereinrichtung (28) vor den Außenumfang (29) des Steckendes (15, 15') in die Sicherungsstellung verdrängbar ist.

17. Anhängekupplung nach Anspruch 15 oder 16 , **dadurch gekennzeichnet, dass** das mindestens eine Sicherungselement (81, 81') symmetrisch zwischen den mindestens zwei Spannelementen (21) angeordnet ist.

18. Anhängekupplung nach einem der Ansprüche 15 bis 17, **dadurch gekennzeichnet, dass** das mindestens eine Sicherungselement (81, 81') und die mindestens zwei Spannelemente (21) in eine Ringnut (30, 30') der Ausnehmungsanordnung (31) eingreifen, und dass das mindestens eine Sicherungselement (81, 81') bezogen auf die Einsteck-Längsrichtung (32) vor den mindestens zwei Spannelementen (21) angeordnet ist, so dass die mindestens zwei Spannelemente (21) in der Spannstellung im Gegensatz zu dem mindestens einen Sicherungselement (81, 81') gegen eine Seitenwand (45) der Ringnut (30, 30') gespannt sind.

19. Anhängekupplung nach einem der Ansprüche 15 bis 18, **dadurch gekennzeichnet, dass** das mindestens eine Sicherungselement (81, 81') von der Verdrängereinrichtung (28) weniger weit vor einen Außenumfang des Steckendes verdrängt wird als die mindestens zwei Spannelemente (21), um deren Spann- und/oder Keilwirkung nicht zu verringern.

20. Anhängekupplung nach einem der Ansprüche 15 bis 19, **dadurch gekennzeichnet, dass** das mindestens eine Sicherungselement (81, 81') einen kleineren Durchmesser als die mindestens zwei Spannelemente (21) aufweist, um deren Spann- und/oder Keilwirkung nicht zu verringern.

21. Anhängekupplung nach einem der Ansprüche 15 bis 20, **dadurch gekennzeichnet, dass** das mindestens eine Sicherungselement (81, 81') etwa dieselbe Längsposition bezüglich der Einsteck-Längsrichtung (32) wie die mindestens zwei Spannelemente (21) aufweist.

22. Anhängekupplung nach einem der vorhergehenden Ansprüche, **dadurch gekennzeichnet, dass** mindestens eines der Spannelemente (21) oder das mindestens eine Sicherungselement (81, 81') durch eine Kugel gebildet ist.

## Claims

1. Trailer coupling for a motor vehicle (19), with a coupling arm (12) which at its free end (13) carries a head section (14) for the releasable attaching of a trailer, and with an insertion end (15, 15') which may be plugged in an axial direction of insertion (32) into a socket (16) of a holder (11) which may be or is fitted to the motor vehicle (19), and with a locking assembly (17) for locking the coupling arm (12) to the holder (11), with a displacement device (28) of the locking assembly (17) provided at the insertion end (15, 15') to displace two or more clamping elements (21) into a locking position in front of an outer periphery (29) of the insertion end (15, 15') and in which the two or more clamping elements (21) engage against a corresponding recess arrangement (31) on the socket (16) and adopt a clamping position in which they clamp at least one coupling arm stop (22) which, relative to the insertion axial direction (32), is located at a distance from the two or more clamping elements (21), against at least one socket stop (23), wherein the two or more clamping elements (21) are arranged with clearance from one another on a first longitudinal half (65) of the insertion end (15,15') and in the circumferential direction (70) of the insertion end , and in the clamping position exert on at least one clamping surface (71-73) of the insertion end (15, 15') provided in the area of a second longitudinal half (67) a clamping force at right-angles to the insertion axial direction (32), wherein the two or more clamping elements (21) engage in a splayfoot manner in the recess arrangement (31), clamping the insertion end in the insertion axial direction and cross to the insertion axial direction and wedging the coupling arm in the socket, and the one or more clamping surfaces (71-73) comprise(s) a peripheral area (75, 76) on the second longitudinal half (67) of the insertion end (15, 15'), which clamp(s) the two or more clamping elements (21) in their clamping position against a corresponding locating area (77, 78) of the socket (16), **characterised in that** the one or more peripheral areas (75) has or have approximately the same longitudinal position on the insertion end (15, 15') as the two or more clamping elements (21), relative to the insertion axial direction (32).

2. Trailer coupling according to claim 1, **characterised in that** the two or more clamping elements (21) enclose an angle of around 100 to 140 degrees.

3. Trailer coupling according to claim 1 or 2, **characterised in that** a longitudinal-half section plane (68) dividing the insertion end (15, 15') into the longitudinal halves (65, 67) runs in the vehicle lateral direction of the motor vehicle (19) in the installed state of the trailer coupling (10).

4. Trailer coupling according to any of the preceding claims, **characterised in that** the two or more clamping elements (21) are symmetrical to a longitudinal axis (69) of the motor vehicle (19) in the installed state of the trailer coupling (10).

5. Trailer coupling according to any of the preceding claims, **characterised in that** the displacement device (28) has at least one inclined face (38) assigned to the two or more clamping elements (21).

6. Trailer coupling according to any of the preceding claims, **characterised in that** the displacement device (28) contains a locking pin (35) guided with axial adjustment facility in a guide channel (39) of the insertion end (15, 15').

7. Trailer coupling according to claim 6, **characterised in that** the clamping surface or surfaces (71-73) include(s) a contact surface (74) in the guide channel (39) in the area of the second longitudinal half (67), with the two or more clamping elements (21) clamping against the contact surface in the clamping position of the locking pin (35).

8. Trailer coupling according to any of the preceding claims, **characterised in that** the socket stop or stops (23) is or are located in the area of an insertion opening (27) of the socket.

9. Trailer coupling according to any of the preceding claims, **characterised in that** the socket stop or stops (23) has or have at least one circular and/or V-shaped recess (25) with a wider opening side oriented towards the insertion opening (27).

10. Trailer coupling according to claim 9, **characterised in that** the clamping surface or surfaces (71-73) include a surface of the recess or recesses (25) which is inclined or rounded relative to the insertion axial direction (32).

11. Trailer coupling according to any of the preceding claims, **characterised in that** each of the two or more clamping elements (21) has substantially the same clamping path relative to the coupling arm stop or stops (22).

12. Trailer according to any of the preceding claims, **characterised in that** the longitudinal spacing of the two or more clamping elements (21) is identical to that of the coupling arm stop or stops (22) assigned to the respective clamping element (21).

13. Trailer coupling according to any of the preceding claims, **characterised in that** the recess arrangement (31) for the two or more clamping elements (21) includes an annular slot (30, 30') which extends at least over an inner section of the socket (16) assigned to the first longitudinal half (65) of the insertion end (15, 15').

14. Trailer coupling according to claim 13, **characterised in that** the annular slot (30, 30') has an entry or clamping bevel inclined towards the coupling arm stop or stops (22) and/or a flat section (44).

15. Trailer coupling according to any of the preceding claims, **characterised in that** the locking assembly has at least one securing element (81, 81') located in the area of the second longitudinal half (67) and which, in the locking position of the locking assembly (17), engages in a recess of the socket (16) to prevent the insertion end (15, 15') from being pulled out of the socket (16), wherein the securing element (81, 81') is at least substantially inoperative against the insertion axial direction (32) when the clamping elements (21) are in their clamping position.

16. Trailer coupling according to claim 15, **characterised in that** the securing element or elements (81, 81') may be displaced by the displacement device (28) into the securing position in front of the outer periphery (29) of the insertion end (15, 15').

17. Trailer coupling according to claim 15 or 16, **characterised in that** the securing element or elements (81, 81') is or are arranged symmetrically between the two or more clamping elements (21).

18. Trailer coupling according to any of claims 15 to 17, **characterised in that** the securing element or elements (81, 81') and the two or more clamping elements (21) engage in an annular slot (30, 30') of the recess arrangement (31), and that the the securing element or elements (81, 81') is or are located, relative to the insertion axial direction (32), in front of the two or more clamping elements (21), so that the two or more clamping elements (21) are clamped in the clamping position, in contrast to the securing element or elements (81, 81'), against a side wall (45) of the annular slot (30, 30').

19. Trailer coupling according to any of claims 15 to 18, **characterised in that** the securing element or elements (81, 81') is or are displaced by the displacement device (28) a shorter distance in front of an outer periphery of the insertion end than the two or more clamping elements (21), so as not to reduce their clamping and/or wedging effect.

20. Trailer coupling according to any of claims 15 to 19, **characterised in that** the securing element or elements (81, 81') has or have a smaller diameter than the two or more clamping elements (21), so as not to reduce their clamping and/or wedging effect.

21. Trailer coupling according to any of claims 15 to 20, **characterised in that** the securing element or elements (81, 81') has or have roughly the same axial position relative to the insertion axial direction (32) as the two or more clamping elements (21).

22. Trailer coupling according to any of the preceding claims, **characterised in that** at least one of the clamping elements (21) or the securing element or elements (81, 81') is or are formed by a ball.

## Revendications

1. Attelage pour un véhicule automobile (19) avec un bras d'attelage (12) qui porte, sur son extrémité libre (13), une pièce de tête (14) pour la fixation détachable d'une remorque et peut être inséré avec une extrémité emboîtable (15, 15') dans un logement à emboîtement (16) d'un support (11) disposé ou pouvant être disposé sur le véhicule automobile (19) dans un sens longitudinal d'emboîtement (32), et avec un ensemble de verrouillage (17) pour le verrouillage du bras d'attelage (12) sur le support (11), avec un dispositif de déplacement (28) disposé dans l'extrémité emboîtable (15, 15') de l'ensemble de verrouillage (17) pour le déplacement d'au moins deux éléments de serrage (21) avant une périphérie extérieure (29) de l'extrémité emboîtable (15, 15') dans une position de verrouillage, dans laquelle au moins les deux éléments de serrage (21) s'engagent contre un ensemble d'évidements correspondant (31) sur le logement à emboîtement (16) et occupent une position de serrage, dans laquelle ils serrent au moins une butée de bras d'attelage (22) disposée à distance par rapport au sens longitudinal d'emboîtement (32) des au moins deux éléments de serrage (21) contre au moins une butée de logement à emboîtement (23), sachant qu'au moins les deux éléments de serrage (21) sont disposés sur une première moitié longitudinale (65) de l'extrémité emboîtable (15, 15') et dans le sens périphérique (70) de l'extrémité emboîtable à une distance l'un par rapport à l'autre et exercent dans la position de serrage sur au moins une surface de serrage (71-73) disposée dans la zone d'une seconde moitié longitudinale (67) de l'extrémité emboîtable (15, 15') une force de serrage transversalement au sens longitudinal d'emboîtement (32), sachant qu'au moins les deux éléments de serrage (21) s'engagent comme des pieds d'écartement dans l'ensemble d'évidements (31), serrent l'extrémité emboîtable dans le sens longitudinal d'emboîtement et transversalement au sens longitudinal d'emboîtement et calent le bras d'attelage dans le logement à emboîtement, et au moins une surface de serrage (71-73) comporte une zone périphérique (75, 76) sur la seconde moitié longitudinale (67) de l'extrémité emboîtable (15, 15'), que serrent au moins les deux éléments de serrage (21) dans leur position de serrage contre une zone de réception correspondante (77, 78) du logement à emboîtement (16), **caractérisé en ce qu'**au moins une zone périphérique (75) présente par rapport au sens longitudinal d'emboîtement (32) à peu près la même position longitudinale sur l'extrémité emboîtable (15, 15') qu'au moins les deux éléments de serrage (21).

2. Attelage selon la revendication 1, **caractérisé en ce qu'**au moins les deux éléments de serrage (21) forment un angle d'environ 100 à 140 degrés.

3. Attelage selon la revendication 1 ou 2, **caractérisé en ce qu'**un plan de coupe de moitié longitudinale (68) divisant l'extrémité emboîtable (15, 15') en moitiés longitudinales (65, 67) s'étend à l'état monté de l'attelage (10) dans le sens transversal du véhicule automobile (19).

4. Attelage selon l'une quelconque des revendications précédentes, **caractérisé en ce qu'**au moins les deux éléments de serrage (21) sont symétriques à un axe longitudinal (69) du véhicule automobile (19) à l'état monté de l'attelage (10).

5. Attelage selon l'une quelconque des revendications précédentes, **caractérisé en ce que** le dispositif de déplacement (28) présente au moins une surface oblique (38) associée aux au moins deux éléments de serrage (21).

6. Attelage selon l'une quelconque des revendications précédentes, **caractérisé en ce que** le dispositif de déplacement (28) contient un boulon de verrouillage (35) guidé de manière réglable en longueur dans un canal de guidage (39) de l'extrémité emboîtable (15, 15').

7. Attelage selon la revendication 6, **caractérisé en ce qu'**au moins une surface de serrage (71-73) comporte une surface d'appui (74) dans le canal de guidage (39) dans la zone de la seconde moitié longitudinale (67), sachant qu'au moins les deux éléments de serrage (21) coincent dans la position de serrage le boulon de verrouillage (35) contre la surface d'appui.

8. Attelage selon l'une quelconque des revendications précédentes, **caractérisé en ce qu'**au moins une butée de logement à emboîtement (23) est disposée dans la zone d'une ouverture d'emboîtement (27) du logement à emboîtement.

9. Attelage selon l'une quelconque des revendications précédentes, **caractérisé en ce qu'**au moins une butée de logement à emboîtement (23) présente au moins un évidement circulaire et/ou un évidement en forme de V (25) avec un côté d'ouverture plus large orienté vers l'ouverture d'emboîtement (27).

10. Attelage selon la revendication 9, **caractérisé en ce qu'**au moins une surface de serrage (71-73) comporte une surface arrondie ou oblique par rapport au sens longitudinal d'emboîtement (32) d'au moins un évidement (25).

11. Attelage selon l'une quelconque des revendications précédentes, **caractérisé en ce que** chacun des au moins deux éléments de serrage (21) présente sensiblement la même course de serrage par rapport à au moins une butée de bras d'attelage (22).

12. Attelage selon l'une quelconque des revendications précédentes, **caractérisé en ce que** la distance longitudinale entre au moins deux éléments de serrage (21) et au moins une butée de bras d'attelage (22), qui est associée à l'élément de serrage (21) respectif, est identique.

13. Attelage selon l'une quelconque des revendications précédentes, **caractérisé en ce que** l'ensemble d'évidements (31) pour au moins les deux éléments de serrage (21) comporte une rainure annulaire (30, 30') qui s'étend au moins sur une zone intérieure associée à la première moitié longitudinale (65) de l'extrémité emboîtable (15, 15') du logement à emboîtement (16).

14. Attelage selon la revendication 13, **caractérisé en ce que** la rainure annulaire (30, 30') présente un biais d'entrée ou de serrage incliné en direction d'au moins une butée de bras d'attelage (22), et/ou une section plate (44).

15. Attelage selon l'une quelconque des revendications précédentes, **caractérisées en ce que** l'ensemble de verrouillage présente au moins un élément de blocage (81, 81') disposé dans la zone de la seconde moitié longitudinale (67), qui s'engage dans la position de verrouillage de l'ensemble de verrouillage (17) pour le blocage de l'extrémité emboîtable (15, 15') contre un retrait du logement à emboîtement (16) dans un évidement sur le logement à emboîtement (16), sachant que l'élément de blocage (81, 81') est au moins sensiblement sans effet dans le sens inverse au sens longitudinal d'emboîtement (32) si les éléments de serrage (21) sont dans leur position de serrage.

16. Attelage selon la revendication 15, **caractérisé en ce qu'**au moins un élément de blocage (81, 81') peut être déplacé dans la position de blocage par le dispositif de déplacement (28) avant la périphérie extérieure (29) de l'extrémité emboîtable (15, 15').

17. Attelage selon la revendication 15 ou 16, **caractérisé en ce que** l'au moins un élément de blocage (81, 81') est disposé symétriquement entre au moins deux éléments de serrage (21).

18. Attelage selon l'une quelconque des revendications 15 à 17, **caractérisé en ce qu'**au moins un élément de blocage (81, 81') et au moins deux éléments de serrage (21) s'engagent dans une rainure annulaire (30, 30') de l'ensemble d'évidements (31), et **en ce qu'**au moins un élément de blocage (81, 81') est disposé par rapport au sens longitudinal d'emboîtement (32) avant les au moins deux éléments de serrage (21), de sorte que les au moins deux éléments de serrage (21) soient serrés dans la position de serrage contrairement à au moins un élément de blocage (81, 81') contre une paroi latérale (45) de la rainure annulaire (30, 30').

19. Attelage selon l'une quelconque des revendications 15 à 18, **caractérisé en ce qu'**au moins un élément de blocage (81, 81') est déplacé par le dispositif de déplacement (28) moins loin avant une périphérie extérieure de l'extrémité emboîtable que les au moins deux éléments de serrage (21) afin de ne pas réduire leur action de serrage et/ou de calage.

20. Attelage selon l'une quelconque des revendications 15 à 19, **caractérisé en ce qu'**au moins un élément de blocage (81, 81') présente un plus petit diamètre qu'au moins les deux éléments de serrage (21) afin de ne pas réduire leur action de serrage et/ou de calage.

21. Attelage selon l'une quelconque des revendications 15 à 20, **caractérisé en ce qu'**au moins un élément de blocage (81, 81') présente à peu près la même position longitudinale par rapport au sens longitudinal d'emboîtement (32) que les au moins deux éléments de serrage (21).

22. Attelage selon l'une quelconque des revendications précédentes, **caractérisé en ce qu'**au moins l'un des éléments de serrage (21) ou au moins un élément de blocage (81, 81') est constitué d'une bille.
